# EUROPEAN PATENT APPLICATION

(11) **EP 3 633 805 A1**
(43) Date of publication of application: **08.04.2020**
(21) Application number: 18197985.7
(22) Date of filing: 01.10.2018
(51) Int. Cl.: H01S 5/022, H01S 3/06

(54) **METHOD AND APPARATUS FOR PRODUCING A RADIATION FIELD AMPLIFYING SYSTEM**

(71) Applicant: Universität Stuttgart, 70174 Stuttgart (DE)
(72) Inventor: Dietrich, Tom, 70197 Stuttgart (DE); Arnold, Thomas, 70180 Stuttgart (DE); Freitag, Christian, 70839 Gerlingen (DE); Zeitvogel, Christine, 72070 Tübingen (DE); Onuseit, Volkher, 70565 Stuttgart (DE); Piehler, Stefan, 70180 Stuttgart (DE); Weichelt, Birgit, 70565 Stuttgart (DE)
(74) Representative: Hoeger, Stellrecht & Partner Patentanwälte mbB

(57) **Abstract**

A method for producing a radiation field amplifying system for amplifying a to be amplified radiation field, in particular for producing a thin disc laser amplifying system, which comprises an amplifying element with a laser active body and a cooling system for cooling said amplifying element with at least one heat sink element wherein the method comprises the step of connecting said amplifying element and said at least one heat sink element is proposed by soldering with a solder filling composition, wherein the step of soldering comprises heating up, in particular melting, said solder filling composition by exposing said solder filling composition to a soldering radiation field.

## Description

The invention relates to a method for producing a radiation field amplifying system. The radiation field amplifying system is used for amplifying a to be amplified radiation field.

In particular, the to be amplified radiation field is a laser.

The radiation field amplifying system is in particular a laser amplifier and/or a laser emitting system. Preferably, the radiation field amplifying system is a thin disc laser amplifying system.

The radiation field amplifying system comprises an amplifying element with a laser active body and a cooling system for cooling said amplifying element. The cooling system comprises at least one heat sink element.

The method comprises the step of connecting said amplifying element and said at least one heat sink element.

In known methods, said amplifying element and said at least one heat sink element are glued together. However, the gluing material has a low thermal conductivity, which for example is approximately in the range between 0,25 W/(m K) to 2,0 W/(m K). Accordingly, the gluing material is a barrier for the thermal heat transfer from the to be cooled amplifying element to the heat sink element and thus reduces the effectiveness of the cooling system.

Furthermore, due to the heat barrier heat sink elements with very high thermal conductivities are necessary to compensate for the heat barrier, which however, are expensive.

In other known methods said amplifying element and said at least one heat sink element are connected by heat conduction soldering in which heat is transferred by a heating element to said at least one heat sink element. The heat has to propagate through the heat sink element, which already results in the disadvantage of heat losses. The part of the heat which transfers through the heat sink element heats up a soldering composition between the heat sink element and the amplifying element for melting said soldering composition.

Within the method of heat conduction soldering, a large amount of heat has to be introduced into the system comprising said at least one heat sink element and said amplifying element.

In particular, these elements have to be heated up to more than 180° C, preferably more than 200° C.

Due to the heat transfer through the heat sink element said amplifying element and the subsequent cooling down thermal and mechanically stresses are induced in the heat sink element, which adversely affect its heat conductivity.

Furthermore, these stresses deform said heat sink element and said amplifying element in a not controllable way.

Accordingly, with this connection method the amplifying element and the at least one heat sink element cannot be connected in a geometrically precise way. However, for an effective, in particular high energy, radiation amplification the arrangement of said amplifying element and said at least one heat sink element has to be produced with high precision and in accordance with pre-defined values.

Therefore, for an arrangement of an amplifying element being connected with a heat sink element by heat conduction said radiation field amplifying system cannot, at least in advance, be designed and configured for high amplification rates. At least subsequent modifications and post processing are necessary.

Furthermore, only for a few materials for the heat sink element the heat conduction soldering is possible. For example diamond, which is a preferred material due to its high thermal conductivity, cannot be used within this method.

Therefore, it is the object of the present invention to provide a method for producing a radiation field amplifying system in which the amplifying system can be produced with a high precision and with an effective cooling system and which should be furthermore economically.

This problem is solved with a method for producing a radiation field amplifying system as described above wherein the method comprises the step of connecting said amplifying element and said at least one heat sink element by soldering with a solder filling composition, wherein the step of soldering comprises heating up, in particular melting, said solder filling composition by exposing said solder filling composition to a soldering radiation field.

Accordingly, said at least one heat sink element and said amplifying system are connected in particular by laser soldering and therefore their connection constitutes essentially no or only a small heat barrier due to the good thermal conductivity of said solder filling composition.

Advantageously, during the connection step, in particular during the process of soldering, heat is only locally to the solder filling composition induced and accordingly the other elements are not adversely affected during the soldering process.

Furthermore, the exposure of said solder filling composition by said soldering radiation field can be finely tuned with respect to the spatial and temporal exposure and the intensity of the exposure, such that the connection between said at least one heat sink element and said amplifying element can be produced with high precision.

Furthermore, advantageously said amplifying element and/or said at least one heat sink element are essentially not effected by said soldering radiation field, such that these elements do not suffer by this production method. In particular, essentially no heat and/or mechanical stresses are induced in said at least one heat sink element and/or said amplifying element.

Another advantage of said method is, that said amplifying element and/or said at least one heat sink element are essentially not or only marginal heated up and can be provided before the step of connection with a predefined desired geometry and this predefined geometry is essentially not adversely affected by the step of soldering. For example, said amplifying element can be provided with a predefined curvature and be connected to said at least one heat sink element by laser soldering with essentially this desired, predefined curvature.

With respect to the arrangement of the connection no further details have been given so far.

In particular, said amplifying element and said at least one heat sink element are connected by a soldering joint.

In particular, said amplifying element has a connecting side and said at least one heat sink element has a connecting side with the two elements being connected to each other at their respective connecting sides. In particular, these connecting sides are part of the connecting soldering joint.

In particular, a connection section extends between said connecting side of said amplifying element and said connecting side of said at least one heat sink element.

Preferably, said connection section has a thickness of at least 100 nm, preferably at least 200 nm, advantageously at least 400 nm, for example at least 500 nm.

The thickness of said connection section is for example smaller than 150 µm, preferably smaller than 100 µm, advantageously smaller than 50 µm.

In particular, said thickness of said connection section is measured in the direction in which said connecting sides of said amplifying element and said at least one heat sink element are facing each other.

For example, said thickness of said connection section corresponds at least approximately to the distance between said two connecting sides.

Preferably, a thickness of said inserted solder filling composition, which in particular builds up said produced soldering joint, corresponds at least approximately to said thickness of said connection section.

In some preferred embodiments said thickness of said connection section is essentially constant throughout said connection section.

In other advantageous embodiments, said thickness of said connection section varies throughout said connection section, but for example varies not more than about 20 %, preferably not more than about 10 %.

In such embodiments said thickness of said connection section is in particular in an outer area larger than in an inner area of said connection. Said inner area is in a direction transverse to the direction in which said connecting sides facing each other more inside the connection section than said outer area.

In particular, said outer area circumferences said inner area.

Preferably, said thickness of said connection section increases, in particular continuously, upon increasing a radial distance from a connection axis.

The axial direction of said connection axis corresponds essentially to said direction in which said connecting sides facing each other.

With respect to said solder filling composition so far no further details have been given.

In particular, said solder filling composition is inserted in said connection section between said connecting side of said amplifying element and said connecting side of said at least one heat sink element.

Preferably, prior to insertion said amplifying element and said at least one heat sink element are arranged with their connecting sides facing each other and after the insertion said solder filling composition is exposed to said soldering radiation field.

For example, said connection section is only filled partly with said solder filling composition.

Preferably a central part of said connection section is filled with said solder filling composition. This provides advantageously for a good thermal heat conduction between said amplifying element and said at least one heat sink element. For example, said central part is arranged next to a pumped part of said amplifying element.

In an advantageous embodiment, an outer part of said connection section, which for example encircles at a rim of said amplifying element said amplifying element, is filled with said solder filling composition. Preferably, this provides a connection which holds said amplifying element stable at said at least one heat sink.

In other preferred embodiments, said connection section is filled essentially fully with said solder filling composition.

In an advantageous embodiment, said solder filling composition is inserted areally in said connection section, such that advantageously a large area or essentially the whole area between said connecting sides is filled with said solder filling composition. One advantage thereof is, that through the large area heat can effectively spread away from said amplifying element and in addition due to the large area of connection a mechanically stable connection is built.

Preferably, said solder filing composition extends at least within a filling area. Said filling area extends between said connecting sides and in particular said filling area extends, in particular essentially transverse to said connecting sides, within said connection section.

For example, said filling area corresponds to a projection of one of said connecting sides to a geometrical projection plane with said geometrical projection plane extending between said connecting sides of said amplifying element and said heat sink element.

For example, said solder filling composition is inserted as a powder or as small pieces into said connection section.

In a preferred embodiment at least a part of said solder filling composition, for example essentially all amount of said solder filling composition, is inserted into said connection section as a foil. This provides advantageously an easy to handle provision of said solder filling composition. Furthermore, with said foil an amount of provided solder filling composition and a location thereof is easy to adjust.

An advantageous embodiment provides, that at least a part of said solder filling composition is attached to a surface of at least one of said connecting sides before said heating up.

Preferably, said solder filling composition is attached to said surface before said amplifying element and said at least one heat sink element are arranged with their connecting sides facing each other at the beginning of the connecting process.

With that, said solder filling composition is already fixed in said connection section preferably at a place where it should be, and with arranging said amplifying element and said at least one heat sink element facing each other also said solder filling composition is placed in the right position in between without an additional adjusting step.

For example the surface of at least one of said connecting sides is coated by at least part of said solder filling composition before said heating up, in particular before said amplifying element and said at least one heat sink element are arranged for being connected.

In preferred embodiments, at least a part of said solder filling composition is attached to the surface of at least one of said connecting sides by thin film deposition, for example by physical vapor deposition and/or by sputtering.

In general, various materials and composition of materials can be used for said solder filling composition.

Advantageously, said solder filling composition comprises a fluxing agent.

In particular, said fluxing agent comprises and/or is an antioxidant agent.

For example, the fluxing agent comprises ammonium and/or chloride, in particular ammonium chloride, and/or a polymeric material, in particular resin, for example rosin.

In particular, said solder filling composition comprises, in particular is, a metal or a metallic alloy.

For example, said solder filling composition comprises silver.

In some embodiments said solder filling composition comprises lead.

In preferred embodiments, said solder filling composition comprises tin.

For example, at least 5 %, preferably at least 10 %, advantageously at least 15 % of the mass of said solder filling composition is tin.

Preferably, less than 50 %, advantageously less than 35 %, in particular less than 25 %, of the mass of said solder filling composition is tin.

In advantageous embodiments, said solder filling composition comprises gold.

For example, at least 50 %, preferably at least 60 %, advantageously at least 70 %, in particular at least 75 % of the mass of said solder filling composition is gold.

In particular, less than 90 %, preferably less than 85 % of the mass of said solder filling composition is gold.

In a preferred embodiment said solder filling composition is a composition of gold and tin, in particular with mass fractions as given above. In a preferred embodiment the mass fractions of gold and tin are at least approximately 80 % and 20 % respectively. Preferably, the preceding numerals are realized with a deviation of not more than 10 %, preferably not more than 5 % and advantageously a small amount, for example a mass fraction of up to 5 %, of one or more additional materials, for example a fluxing agent, is also comprised by said solder filling composition.

Advantageously, said solder filling composition has a thermal conductivity of at least 10 W/(m K), preferably of at least 25 W/(m K), for example at least 40 W/(m K).

For example, the thermal conductivity of said soldering filling composition is smaller than 200 W/(m K), in particular 150 W/(m K).

With respect to the exposure to said soldering radiation field and to said soldering radiation field itself no further details have been given so far.

In an advantageous embodiment said solder filling composition is exposed to exactly one soldering radiation field. This provides an easy to handle method, because only one soldering radiation field has to be adjusted.

In other preferred embodiments, said solder filling composition is exposed to several soldering radiation fields. An advantage thereof is that with said several soldering radiation fields characteristics of the exposure, such as the temporal and/or spatial exposure and/or the intensity of the exposure and/or the introduction of energy due to the exposure, can be more flexible adjusted.

In the following, the reference to one soldering radiation field has to be understood as a reference to the exactly one soldering radiation field or to at least one, for example only one, of the several soldering radiation fields and/or to some, for example all, of said several soldering radiation fields.

In particular, said solder filling composition is exposed within at least one exposure interval to one soldering radiation field.

In some preferred embodiment, said solder filling composition is exposed to the soldering radiation field within only exactly one exposure interval.

In other preferred embodiments, said solder filling composition is exposed to the soldering radiation field within several exposure intervals.

In the following the reference to one exposure interval has to be understood as a reference to the exactly one exposure interval or to at least one, for example only one, of the several exposure intervals and/or to some, for example all, of said several exposure intervals.

In particular, one exposure interval has a length of at least 0,1 seconds, preferably of at least 0,5 seconds and/or has a duration of not more than 10 seconds, for example not more than 5 seconds, in particular not more than 2 seconds.

In particular, the total time of exposure to one soldering radiation field is at least 0,5 seconds, for example at least 1 second and/or not more than 30 seconds, preferably not more than 20 seconds, for example not more than 10 seconds, in particular not more than 5 seconds.

In a preferred embodiment in one exposure interval the intensity of one soldering radiation field is varied, in particular is continuously varied, with respect to time, in particular varied between a first exposure intensity and a second exposure intensity. The advantage thereof is that melting and/or cooling of said solder filling composition can be controlled by variation of said intensity and therefore in particular a more homogeneous soldering joint with better heat conductivity and/or a more stable soldering joint can be achieved.

In particular, said intensity varies between a first exposure intensity and a second exposure intensity.

For example, said intensity is continuously increased from said first exposure intensity to said second exposure intensity. In particular, in some embodiments said first exposure intensity is zero and the variation corresponds to a, in particular slowly, increase of said exposure intensity.

In other advantageous embodiments said first and second exposure intensities differ not more than by 50 %, for example by less than 20 %.

In an advantageous embodiment in one exposure interval essentially all of said solder filling composition, for example essentially all of said solder filling composition in said connection section and/or in said filling area, is exposed to one soldering radiation field. One advantage thereof can be seen therein, that the exposure of essentially all of said solder filling composition is easy to handle and said solder filling composition is heated essentially homogeneously.

In another preferred embodiment in one exposure interval the intensity of one soldering radiation field is varied spatially.

In particular, only a part of said solder filling composition in said filling area is exposed to one soldering radiation field at a same moment in time and other parts of said solder filling composition are exposed consecutively with respect to time to the one soldering radiation field or to another soldering radiation field.

An advantage thereof is, that the special building up of the soldering joint can be controlled and preferably adjusted to predefined requirements, for example for adjusting geometrical requirements.

For example at first a radial inner area of said solder filling composition is heated up and consecutively radial more outer areas are heated up such that for example pollutants flow with the consecutively more radial outward liquid solder filling composition to an outer area of the connection section. The radial direction is with respect to the connection axis.

In another preferred embodiment consecutively following stripes of said solder filling composition are one after the other exposed to one soldering radiation field. Thereby advantageously also for example pollutants are transferred with the consecutively melted stripes of said solder filling composition and accordingly the pollutants flow to an outer area of said connection section.

Advantageously the wavelength of one soldering radiation field is chosen and selected such that said amplifying element and/or said heat sink element are essentially transparent for the soldering radiation field.

For example said amplifying element and/or said heat sink element have an absorption rate at the wavelength of the soldering radiation field of less than 10 %, preferably less than 5 %, advantageously of less than 1 %, in particular of less than 0,5 %.

Preferably, the wavelength of the soldering radiation field is chosen and selected such that said solder filling composition has a large absorption rate for the chosen and selected wavelength.

For example said solder filling composition has an absorption rate of more than 90 %, preferably of more than 95 %, advantageously of more than 99 % at the wavelength of the soldering radiation field.

In particular, the wavelength of the soldering radiation field differs to the wavelength of said to be amplified radiation field and to a wavelength of a pumping radiation field.

Preferably the wavelength of the soldering radiation field differs by more than 5 %, advantageously by more than 10 % to the wavelength of said to be amplified radiation field and/or the wavelength of said pumping radiation field.

Advantageously the wavelength of the soldering radiation field differs by more than 80 nm, preferably by more than 100 nm to the wavelength of said to be amplified radiation field and/or to the wavelength of said pumping radiation field.

For example, the wavelength of the soldering radiation field is larger than 500 nm, in particular larger than 700 nm.

In particular, the wavelength of the soldering radiation field is smaller than 900 nm.

In general, the soldering radiation field can be directed from different directions onto said solder filling composition.

In a preferred embodiment the soldering radiation field hits at first a side of said solder filling composition which faces towards said amplifying element.

In particular, said soldering radiation field propagates through that amplifying element and propagates into said connection section through an interface between said amplifying element and said connection section.

In another preferred embodiment the soldering radiation field hits at first a side of said solder filling composition which faces towards said at least one heat sink element.

In particular, the soldering radiation field propagates through said at least one heat sink element and propagates into said connection section through an interface between said heat sink element and said connection section.

Advantageously, said amplifying element, through which the soldering radiation field propagates, and/or said heat sink element, through which the soldering radiation field propagates, absorbs essentially no power from the soldering radiation field. In particular it is understood that said element essentially absorbs no power from the soldering radiation field, when said element absorbs less than 5 %, preferably less than 1 % of the power from the soldering radiation field.

With that advantageously essentially no energy is lost by propagating through other elements than said solder filling composition and also said amplifying element and said at least one heat sink element are not adversely affected by the soldering radiation field.

In an advantageous embodiment said amplifying element and/or said heat sink element are kept, in particular during said step of soldering, below a predefined uppermost temperature. For example said uppermost temperature is smaller than 200° C, in particular smaller than 100° C.

In preferred embodiments, said amplifying element and/or said at least one heat sink element are kept essentially strain free, in particular free of thermal induced strain. With that said elements are not adversely effected by said strain and provide a higher heat conductivity and/or transmission rate for said to be amplified radiation field.

In particular, a power of the soldering radiation field is larger than 40 W, preferably larger than 60 W, in particular larger than 80 W.

For example the power of the soldering radiation field is smaller than 300 W, in particular smaller than 200 W.

Preferably, the intensity of the soldering radiation field is larger than 50 W/cm², preferably larger than 80 W/cm².

For example the intensity of the soldering radiation field is smaller than 300 W/cm².

With respect to properties and an attachment of said amplifying element no further details have been given so far.

Preferably, said amplifying element is disc-liked shaped.

In particular, an extension of said amplifying element radial to an optical axis of said amplifying system is much larger, for example at least 5 times larger, preferably at least 10 times larger, than an extension of said amplifying element in axial direction.

In particular, said connection side of said amplifying element is at least prior to the mounting into said radiation field amplifying system essentially planar and its surface extends preferably essentially in a geometrical reference plane. In particular, an opposing side to said connecting side of said amplifying element is at least prior to said mounting essentially planar and its surface extends essentially in a geometrical reference plane, which preferably is essentially parallel to the geometrical reference plane of said connecting side.

In particular, the distance of the connecting side to its opposing side corresponds essentially to the smaller extension of the disliked shaped amplifying element.

In advantageous embodiments, said amplifying element is a laser disc.

In particular, said laser active body of said amplifying element comprises a laser active material.

For example said laser active body comprises titanium, for example a titanium doped material.

In particular said laser active body comprises aluminum, for example aluminumoxide, Al₂O₃.

In an advantageous embodiment said laser active body comprises Sapphire, in particular titanium doped Sapphire.

In doped material preferred embodiments, said laser active body comprises an Ytterbium doped material and/or a Neodymium doped material and/or a Thulium doped material.

Preferably, said laser active body comprises yttrium, in particular yttrium-Aluminum garnet, Y₃Al₅O₁₂. Advantageously, said yttrium and/or yttrium Aluminum garnet is doped with Ytterbium and/or Neodymium and/or Thulium. In preferred embodiments said laser active body comprises Lutetium, in particular Lutetium (III) oxide, which advantageously is doped with Ytterbium and/or Neodymium and/or Thulium.

Preferably, said amplifying element has a high reflective layer at its connecting side. Said high reflective layer is in particular for said to be amplified radiation field highly reflective and for example reflects at least 95 %, preferably at least 99 %, advantageously at least 99,5 % of incident to be amplified radiation field.

For example, for the soldering radiation field said high reflective layer is not highly reflective

Advantageously, said amplifying element has at its connecting side a metallization coating. Said metallization coating provides for a better connection to said solder filling composition and therefore the solder joint is more stable and preferably has a better heat conductivity.

In particular, said metallization coating is on said high reflective layer.

For example, said metallization coating comprises gold.

In particular, said metallization coating comprises chromium.

In preferred embodiments, said amplifying element comprises an antireflection layer at an entry side and/or exiting side for said to be amplified radiation field, whereas said entry side and said exiting side in general coincide. In particular, said antireflection layer essentially prevents reflection of to be amplified radiation field, for example at least 99 %, advantageously at least 99,5 % of incident to amplified radiation field is transmitted through said antireflection layer.

In a preferred embodiment said amplifying element is curved, in particular slightly curved. Advantageously said amplifying element is curved with a predefined radius of curvature.

For example said radius of curvature of the curvature of said amplifying element is at least 0,5 m, preferably at least 1 m, in particular at least 2 m.

In particular, said radius of curvature of the curvature of said amplifying element is smaller than 10 m, for example smaller than 8 m, in particular smaller than 5 m.

For example, said amplifying element is already produced with said curvature and in particular provided with said curvature.

In a preferred embodiment said amplifying element is provided essentially planar and said curvature is induced to said amplifying element during the production process.

In particular, in said method a supporting device for attaching said amplifying element is provided, in particular for the step of connecting said amplifying element to said at least one heat sink element.

In particular, said amplifying element is attached to an attaching area of said supporting device.

In an advantageous embodiment a shape of said amplifying element is shaped, in particular modified, according to a shape of said attaching area of said supporting device.

Preferably, said amplifying element is curved according to a curvature of said attaching area of said supporting device. Therefore in an easy to handle manner in this embodiment said amplifying element is provided with a predefined and desired curvature and advantageously said amplifying element keeps said curvature during the step of connecting due to the advantageous properties of the laser soldering process.

In preferred embodiments the shape of said amplifying element, in particular its bending curvature, is kept essentially the same during the exposure to the soldering radiation field.

With respect to said supporting device so far no further details have been given.

For example, said amplifying element is mechanically, in particular with a mechanical device, attached to said supporting device.

In a preferred embodiment said amplifying element is only kept by adhesion to said supporting device, in particular to its attaching area.

The attachment of said amplifying element to said supporting device only by adhesion is in particular possible because due to the soldering by a soldering radiation field said supporting device and said amplifying element are essentially not heated up and the attachment by adhesion is stable also during soldering.

In particular, said supporting device comprises a supporting structure, which in particular provides said attaching area, for said amplifying element.

Preferably, said supporting device, in particular its supporting structure is built by a material which is essentially transparent for the soldering radiation field. For example, said supporting device, in particular its supporting structure, comprises Ytterbium and/or Aluminum.

In preferred embodiments said supporting device, in particular its supporting structure, is built from Yttrium-Aluminum garnet (YAG), Y₃Al₅O₁₂.

In particular, also for said at least one heat sink element a supporting device is provided.

Preferably, said supporting devices, in particular supporting structures thereof, for said amplifying element and for said heat sink element are movable with respect to each other, in particular in an axial direction of a supporting axis.

With respect to said heat sink element no further details have been given so far.

For example, said cooling system is provided with only one heat sink element.

In preferred embodiments, said cooling system comprises several heat sink elements.

In the following the reference to one heat sink element has to be understood as a reference to the at least one heat sink element or the only one heat sink element and/or to at least one, for example only one, heat sink element of the several heat sink elements and/or to some, for example all, of the several heat sink elements.

In particular, the reference to one heat sink element has to be understood as the reference to the heat sink element which is connected to said amplifying element.

In particular, the heat sink element comprises, in particular is built, by material with a good thermal conductivity.

In a preferred embodiment the heat sink element comprises and/or is built up by diamond. This provides a heat sink element with a high thermal conductivity and therefore provides a good cooling of said amplifying element during amplification of to be amplified radiation field.

In another advantageous embodiment said heat sink element comprises silicon, in particular silicon carbide. This provides a heat sink element which is cheap and still has a good thermal conductivity. Due to the connecting by laser soldering also this material can be used, because the soldering joint provides a good thermal conductivity and due to the soldering by soldering radiation field this heat sink is not adversely affected.

In preferred embodiments the heat sink element is covered at its connecting side with a metallization coating. This provides a better soldering joint as described above in connection with the metallization coating for the amplifying element. In particular for advantageous properties of the metallization coating reference is made to the description of the metallization coating of said amplifying element.

In advantageous embodiments the material of the laser active body and the heat sink element, in particular which is connected to said amplifying element, are such, that their thermal expansion coefficients are at least approximately the same, for example differ by less than 20 %, for example by less than 10 %, preferably by less than 5 %.

In a preferred embodiment, the connecting side of the heat sink element is essentially planar, in particular its surface extends essentially within a geometrical reference claim.

In another advantageous embodiment the connecting side of said heat sink element is, in particular slightly curved.

For advantageous values of the radius of curvature for the connecting side reference is made to the values given above in connection with the amplifying element.

In a preferred embodiment the radius of curvature of the heat sink element at its connecting side is at least approximately the same as the radius of curvature of said amplifying element at its connecting side.

In another advantageous embodiment the radius of curvature of said heat sink element at its connecting side is smaller than the radius of curvature of said amplifying element at its connecting side, but in particular by not more than 10 %, smaller.

Further details concerning the method have been so far not given.

In particular, said amplifying element and said heat sink element which is to be connected to said amplifying element are moved, in particular prior to the step of soldering, to each other, such that said solder filling composition is in contact with both elements.

In a preferred embodiment said amplifying element and said heat sink element, in particular with said solder filling composition in between, are pressed against each other during said soldering process.

In an advantageous embodiment said step of soldering is done in vacuum. This provides for a more pure soldering joint, because for example oxidation of said solder filling composition is avoided.

In another preferred embodiment said solder filling composition is surrounded by an anti-oxidation protective atmosphere during said soldering process. This provides also for a more pure soldering joint.

Said anti-oxidation protective atmosphere is for example provided by one or more noble gases, for example argon.

Another aspect of the invention relates to a radiation field amplifying system for amplifying a to be amplified radiation field, in particular to a laser amplifying system, for example to a thin disc laser amplifying system, as described at the beginning of the specification.

The underlying problem of this aspect of the invention is analogous to the problem described above.

According to the invention, this problem is solved by a radiation field amplifying system as described above, wherein said amplifying element and said at least one heat sink element are connected by a soldering joint and when said soldering joint has been produced by a laser soldering.

The advantage of said radiation field amplifying system corresponds to the advantages given above in connection with the method concerning laser soldering.

Preferably the radiation field amplifying system and in particular its soldering joint are produced by a method with one or several features as described above and/or one element or several elements of said radiation field amplifying system has one or several features as described above. The corresponding advantages of said features transfer to said radiation field amplifying system.

Another aspect of the invention relates to an apparatus for producing a radiation field amplifying system as described above.

The underlying problem of this aspect of the invention corresponds essentially to the problem stated above.

According to this aspect of the invention the corresponding problem is solved by an apparatus for producing a radiation field amplifying system with an amplifying element and a cooling system for said amplifying element with at least one heat sink element, wherein said apparatus comprises a first supporting device for said amplifying element and a second supporting device for said heat sink element and said apparatus comprises a radiation field providing system for providing a soldering radiation field.

The advantage of this aspect of the invention corresponds to the advantages described above.

In preferred embodiments said apparatus comprises features as described above and/or is constructed to connect said at least one heat sink element and said amplifying element in accordance with one or more features as described above in connection with the method and/or in connection with said amplifying system.

In the preceding specification and in the following the formulation "at least approximately" comprises embodiments, in which a value is realized, which deviates from the given value due to technical conditions, for example tolerances, or deviates in a technical marginal manner. For example deviating values which deviate from the given value by not more than ± 10 % preferably by not more than ± 5 %, advantageously by not more than ± 1 % are comprised.

Accordingly, the preceding specification of solutions according to the present invention comprises in particular combinations of features according to the following consecutively numbered embodiments:
1. Method for producing a radiation field amplifying system for amplifying a to be amplified radiation field, in particular for producing a thin disc laser amplifying system, which comprises an amplifying element with a laser active body and a cooling system for cooling said amplifying element with at least one heat sink element wherein the method comprises the step of connecting said amplifying element and said at least one heat sink element by soldering with a solder filling composition, wherein the step of soldering comprises heating up, in particular melting, said solder filling composition by exposing said solder filling composition to a soldering radiation field.
2. Method according to embodiment 1, wherein said solder filling composition is inserted in a connection section between a connecting side of said amplifying element and a connecting side of said at least one heat sink element.
3. Method according to one of the preceding embodiments, wherein said connection section is filled with said solder filling composition.
4. Method according to one of the preceding embodiments, wherein said solder filling composition is inserted areally in said connection section, in particular said solder filling composition extends at least within a filling area with said filling area extends between said connecting sides, in particular said filling area corresponds to a projection of one of said connecting sides onto a geometrical projection plane which extends between said connecting sides of said amplifying element and said heat sink element.
5. Method according to one of the preceding embodiments, wherein at least a part of said solder filling composition is inserted into said connection section as a foil.
6. Method according to one of the preceding embodiments, wherein at least a part of said solder filling composition is attached to a surface of at least one of said connecting sides before said heating up.
7. Method according to one of the preceding embodiments, wherein the surface of at least one of said connecting sides is coated by at least a part of said solder filling composition before said heating up.
8. Method according to one of the preceding embodiments, wherein at least a part of said solder filling composition is attached to the surface of at least one of said connecting sides by thin-film deposition, in particular by physical vapor deposition and/or by sputtering.
9. Method according to one of the preceding embodiments, wherein said solder filling composition comprises gold and/or tin.
10. Method according to one of the preceding embodiments, wherein said solder filling composition is exposed to one soldering radiation field or several soldering radiation fields within one exposure interval or within several exposure intervals.
11. Method according to one of the preceding embodiments, wherein at least during one exposure interval the intensity of said soldering radiation field is, in particular continuously, varied with respect to time between a first exposure intensity and a second exposure intensity.
12. Method according to one of the preceding embodiments, wherein at least during one exposure interval all of said solder filling composition in said filling area is exposed to said soldering radiation field.
13. Method according to one of the preceding embodiments, wherein at least during one exposure interval only a part of said solder filling composition in said filling area is exposed to said soldering radiation field and different parts of said solder filling composition are exposed consecutively with respect to time to said soldering radiation field.
14. Method according to one of the preceding embodiments, wherein the wavelength of said soldering radiation field is chosen and selected such that said amplifying element and/or said heat sink element are essentially transparent for said soldering radiation field.
15. Method according to one of the preceding embodiments, wherein the wavelength of said soldering radiation field is chosen and selected such that said solder filling composition has a large absorption rate for the chosen and selected wavelength.
16. Method according to one of the preceding embodiments, wherein said soldering radiation field hits at first a side of said solder filling composition which faces towards said amplifying element.
17. Method according to one of the preceding embodiments, wherein said soldering radiation field propagates through said amplifying element and propagates into said connection section through an interface between said amplifying element and said connection section.
18. Method according to one of the preceding embodiments, wherein said soldering radiation field hits at first a side of said solder filling composition which faces towards said heat sink element.
19. Method according to one of the preceding embodiments, wherein said soldering radiation field propagates through said heat sink element and propagates into said connection section through an interface between said heat sink element and said connection section.
20. Method according to one of the preceding embodiments, wherein said amplifying element, through which said soldering radiation field propagates, and/or said heat sink element, through which said soldering radiation field propagates, absorb essentially no power from said soldering radiation field.
21. Method according to one of the preceding embodiments, wherein said amplifying element and/or said at least one heat sink element are kept below a pre-defined uppermost temperature.
22. Method according to one of the preceding embodiments, wherein said amplifying element and/or said at least one heat sink element are kept essentially strain free, in particular free of thermal induced strain.
23. Method according to one of the preceding embodiments, wherein said amplifying element is, in particular slightly, curved in particular with a predefined radius of curvature.
24. Method according to one of the preceding embodiments, wherein said amplifying element is attached to an attaching area of a supporting device.
25. Method according to one of the preceding embodiments, wherein the shape of said amplifying element is shaped, in particular modified, according to a shape of said attaching area of said supporting device.
26. Method according to one of the preceding embodiments, wherein said amplifying element is curved according to a curvature of said attaching area of said supporting device.
27. Method according to one of the preceding embodiments, wherein the shape of said amplifying element is kept essentially the same during said exposure to said soldering radiation field.
28. Method according to one of the preceding embodiments, wherein a bending curvature of said amplifying element is kept essentially constant during said exposure to said soldering radiation field.
29. Method according to one of the preceding embodiments, wherein said amplifying element and said at least one heat sink element, in particular with said solder filling composition in between, are pressed against each other during said soldering process.
30. Method according to one of the preceding embodiments, wherein said soldering is done in vacuum.
31. Method according to one of the preceding embodiments, wherein said solder filling composition is surrounded by an anti-oxidation protective atmosphere during said soldering process.
32. Radiation field amplifying system for amplifying a to be amplified radiation field, in particular a thin disc laser amplifying system, which comprises an amplifying element with a laser active body and a cooling system for cooling said amplifying element with at least one heat sink element wherein said amplifying element and said at least one heat sink element are connected by a soldering joint and wherein said soldering joint has been produced by laser soldering, in particular by a method according to one of the preceding embodiments.
33. Method or radiation field amplifying system according to one of the preceding embodiments, wherein said amplifying element and said heat sink element are, in particular with connecting sides, arranged adjacently to each other.
34. Radiation field amplifying system or method according to one of the preceding embodiments, wherein said connection section between said amplifying element and said heat sink element is, in particular after the connection process, essentially fully filled with said solder filling composition.
35. Radiation field amplifying system or method according to one of the preceding embodiments, wherein a thickness of said connection section, which essentially corresponds to a distance between the surface of said connecting side of said amplifying element and said connecting side of said heat sink element, increases, in particular slightly, upon increasing a radial distance from an axis of the arrangement, in particular an optical axis of said radiation field amplifying system.
36. Radiation field amplifying system or method according to one of the preceding embodiments, wherein a curvature of said connecting side of said amplifying element corresponds, in particular after the connecting process, essentially to a predefined curvature, in particular to a curvature of an attaching area of a supporting device which has supported said amplifying element during the connecting process.
37. Radiation field amplifying system or method according to one of the preceding embodiments, wherein said amplifying element comprises, in particular at its connecting side, a high reflection layer with said high reflection layer being highly reflective for said to be amplified radiation field.
38. Radiation field amplifying system or method according to one of the preceding embodiments, wherein said amplifying element is covered at its connecting side with a metallization coating.
39. Radiation field amplifying system or method according to one of the preceding embodiments, wherein said heat sink element is coated at its connecting side, in particular within a connecting area, with a metallization coating.
40. Apparatus for producing a radiation field amplifying system, in particular a thin disc laser amplifying system, with an amplifying element and a cooling system for said amplifying element with at least one heat sink element, wherein said apparatus comprises a first supporting device for said amplifying element and a second supporting device for said heat sink element and wherein said apparatus comprises a radiation field providing system for providing a soldering radiation field.

Further features and explanations with respect to advantageous embodiments of the present invention are disclosed in connection with a detailed specification and the drawings.

In the drawings:
- Fig. 1: shows a radiation field amplifying system according to a first embodiment;
- Fig. 2: shows an enlarged view of an amplifying element and a heat sink element of the radiation field amplifying system which are connected by a soldering joint;
- Fig. 3: shows an enlarged view of an amplifying element and a heat sink element which are connected by a soldering joint according to a second embodiment of a radiation field amplifying system;
- Fig. 4: shows an apparatus for producing a radiation field amplifying system and an arrangement of an amplifying element, a heat sink element and in between a solder filling composition during exposure to a soldering radiation field according to a first embodiment of a method for producing a radiation field amplifying system;
- Fig. 5: shows similar view as fig. 4 of an apparatus and a method according to another embodiment and
- Fig. 6: shows a filling area which is filled with said solder filling composition and which is partly exposed to said soldering radiation field.

An as a whole designated with 10 radiation field amplifying system according to a first embodiment comprises an amplifying element which is designated as a whole as 12, a cooling system 14 for cooling said amplifying element 12 and an optical system 16 for guiding a to be amplified radiation field 22 along an optical path.

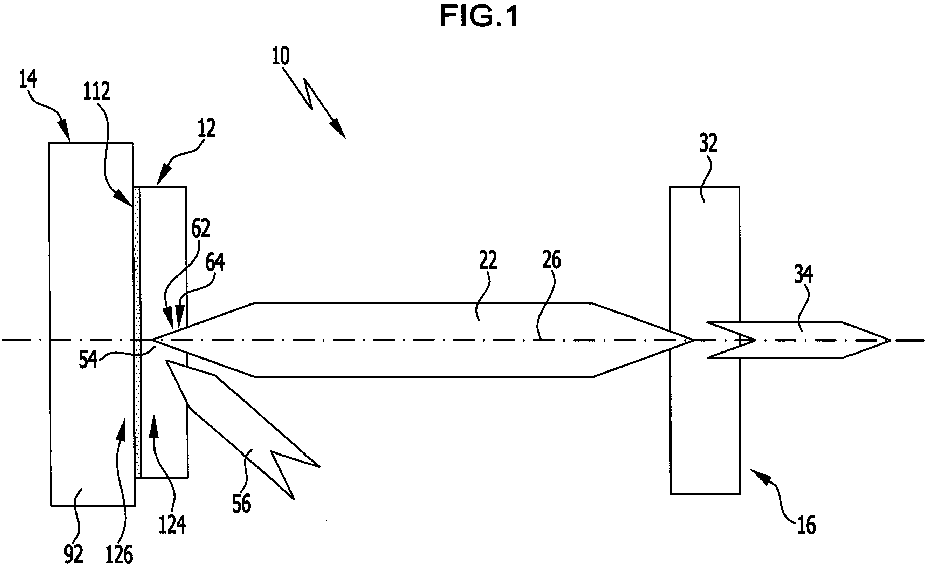

Exemplarily a radiation field amplifying system 10 is shown in fig. 1.

The optical path passes through amplifying element 12, in particular essentially in axial direction with respect to an optical axis 26 of said radiation field amplifying system 10, and to be amplified radiation field 22 is amplified by passing through amplifying element 12.

Optical system 16 according to the present embodiment comprises a coupling element 32 on which to be amplified radiation field 22 is incident when passing along the optical path.

Coupling element 32 couples out a part of to be amplified radiation field 22 and accordingly an amplified radiation field 34 is provided.

In particular, coupling element 32 is semi-reflective for incident to be amplified radiation field 22. Therefore, a part of incident to be amplified radiation field 22 is reflected by coupling element 32 and propagates further along the optical path and is again amplified within amplifying element 12. Another part of incident to be amplified radiation field 22 is coupled out, for example transmitted, by coupling element 32 to be provided as amplified radiation field 34.

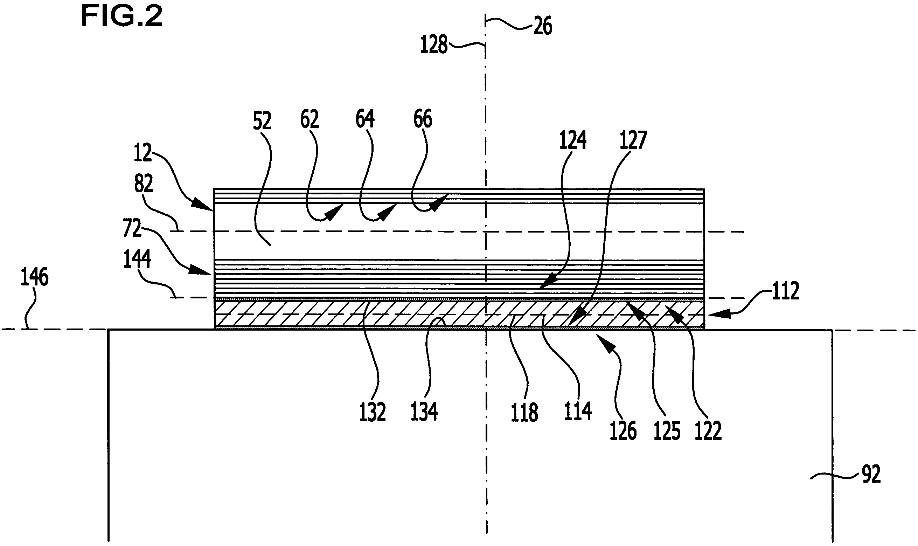

Amplifying element 12 comprises a laser active body 52 (fig. 2), which comprises a laser active material. The laser active material exhibits a laser active transition.

In a pumped part 54 of laser active body 52 energy is pumped for amplifying to be amplified radiation field 22. In particular, a pumping radiation field 56 penetrates pumped part 54 and provides pumping energy.

With the pumping energy the laser active transition is excited and a population inversion is induced in pumped part 54 of laser active body 52.

To be amplified radiation field 22 propagates along the optical path through pumped part 54 and is amplified by stimulated emission of the excited laser active transition within pumped part 54 of laser active body 52.

To be amplified radiation field 22 enters amplifying element 12 at an entry side 62 and exits amplifying element 12 at an exiting side 64. In the present embodiment, entry side 62 and exiting side 64 coincide.

In particular, amplifying element 12 comprises at entry side 62 and at exiting side 64 an anti-reflection layer 66. Anti-reflection layer 66 essentially prevents reflection of to be amplified radiation field 22. For example, at least 99,5 % of incident to be amplified radiation field 22 is transmitted through anti-reflection layer 66.

For example, anti-reflection layer 66 comprises several sublayers, which for example possess alternately a high refractive index and a low refractive index.

In the present embodiment laser active body 52 is at entry side 62 and at exiting side 64 covered with anti-reflection layer 66.

In particular, amplifying element 12 comprises a high-reflective layer 72, which is highly reflective for to be amplified radiation field 22.

Advantageously, high reflective layer 72 reflects at least 99,5 % of incident to be amplified radiation field 22.

For example, high reflective layer 72 comprises several sublayers, which for example possess alternately a high refractive index and a low refractive index.

In the present embodiment, laser active body 52 is at one side covered with high reflective layer 72.

Preferably, high reflective layer 72 is arranged at a side of amplifying element 12 which is, in particular with respect to the axial direction of optical axis 26, opposite to entry side 62.

Accordingly, the optical path for to be amplified radiation field 22 runs from entry side 62 through laser active body 52 to high reflective layer 72 and backwards to exiting side 64.

In particular, the optical path hits high reflective layer 72 at least approximately perpendicular and to be amplified radiation field 22 enters and exits amplifying element 12 at essentially the same area of its side which corresponds to coinciding entry side 62 and exiting side 64.

Advantageously, amplifying element 12 is disc like shaped with an extension of amplifying element 12 within a geometrical disc plane 82 being much larger, for example at least five times larger, than an extension of amplifying element 12 perpendicular to geometrical disc plane 82.

In particular, geometrical disc plane 82 runs at least approximately perpendicular to optical axis 26.

In the present embodiment geometrical disc plane 82 extends through laser active body 52, which is also essentially disc like shaped.

In particular, geometrical disc plane 82 extends between two sides of amplifying element 12 with the surfaces of the two sides being essentially planar and the surfaces of the two sides running essentially parallel to geometrical disc plane 82.

In particular, at one of the two sides anti-reflection layer 66 is arranged and at the other of the two sides high reflective layer 72 is arranged.

Preferably, high reflective layer 72 extends essentially within a geometrical plane which runs essentially parallel to geometrical disc plane 82.

In particular, anti-reflection layer 66 extends essentially in a geometrical plane which runs essentially parallel to geometrical disc plane 82.

Cooling system 14 is provided for cooling amplifying element 12.

In particular, due to the introduction of pumping energy into pumped part 54 this part and amplifying element 12 as a whole heats up during operation of radiation field amplifying system 10 for example to temperatures above 100° C. Preferably the temperatures are kept below 140° C.

Cooling system 14 transfers heat away from amplifying element 12, in particular away from pumped part 54, for example towards an heat absorption device. Therefore, the locally produced heat is efficiently discharged and spread.

Cooling system 14 comprises a heat sink element 92, which is in thermal contact with amplifying element 12.

Heat sink element 92 comprises a material with good thermal conductivity for providing an efficient heat transfer.

Via the thermal contact, heat is transferred away from amplifying element 12 towards heat sink element 92, where advantageously the heat is further spreaded.

Heat sink element 92 and amplifying element 12 are connected by a soldering joint 112.

Soldering joint 112 comprises a solder filling composition 114, which extends at least within a filling area 118 of a connection section 122.

Connection section 122 extends essentially from a connecting side 124 of amplifying element 12 to a connecting side 126 of heat sink element 92.

In particular, solder filling composition 114 is within a contact area 125 at connecting side 124 in contact with amplifying element 12 and solder filling composition 114 is within a contact area 127 at connecting side 126 in contact with heat sink element 92.

Filling area 118 extends in particular areally between both connecting sides 124 and 126. For example, filling area 118 extends essentially within a geometrical plane which runs between connecting sides 124 and 126. Preferably, filling area 118 has essentially the same areal extensions as connecting side 124 of amplifying element 12.

In particular, filling area 118 and contact area 125 have essentially the same areal extensions and essentially the same shape. In particular, these areas 118, 125 are essentially the same except that contact area 125 and filling area 118 are shifted with respect to each other in axial direction of connection axis 128.

Contact area 125 corresponds essentially to the surface of amplifying element 12 of connecting side 124.

For example, connecting side 126 of heat sink element 92 is larger, in particular with respect to a radial extension with respect to optical axis 26 and a connection axis 128 of the arrangement of soldering joint 112, than connecting side 124 of amplifying element 12.

Within this embodiment, contact area 127 at connecting side 126 of heat sink element 92 corresponds essentially to a projection of connecting side 124 of amplifying element 12 onto the surface of connecting side 126 of heat sink element 92.

Connection section 122 extends in particular areally between amplifying element 12 and heat sink element 92.

Preferably, connection section 122 extends essentially transverse to connection axis 128, in particular with essentially the same radial extension as amplifying element 12.

Connection axis 128 is an axis with respect to the arrangement of soldering joint 112.

Preferably, connection axis 128 runs at least approximately parallel to optical axis 26, in particular both axes 128 and 26 coincide.

An extension of connection section 122 in a radial direction with respect to connection axis 128 is much larger, for example at least five times larger, than an extension of connection section 122 in an axial direction with respect to connection axis 128.

Connecting sides 124 and 126 of amplifying element 12 and heat sink element 92 are arranged adjacently to each other with connection section 122 extending in between the connecting sides 124 and 126. With respect to the axial direction of connection axis 128 amplifying element 112, connection section 122 and heat sink element 192 are arranged successively.

Via the soldering filling composition 114 connecting sides 124 and 126 of amplifying element 12 and heat sink element 92 are adhesively connected.

In particular, connecting side 124 of amplifying element 12 is covered with a metallization coating 132. Metallization coating 132 comprises at least one metal and in particular strengthens soldering joint 112.

Preferably, connecting side 126 of heat sink element 92 is covered with a metallization coating 134. Metallization coating 134 comprises at least one metal and in particular strengthens soldering joint 112.

In the present embodiment, connecting side 124 of amplifying element 12, in particular its surface, extends essentially in a geometrical reference plane 144. Geometrical reference plane 144 runs in particular at least approximately perpendicular to connection axis 128.

Connecting side 126 of heat sink element 92, in particular its surface, extends, at least within contact area 127, essentially within a geometrical reference plane 146.

Geometrical reference plane 146 runs in particular at least approximately perpendicular to connection axis 128.

Preferably, geometrical reference planes 144 and 146 of the connecting sides 124 and 126 run essentially parallel to each other.

In particular, connecting side 124 of amplifying element 12 corresponds to the side of amplifying element 12 at which high reflective layer 72 is arranged.

Accordingly, in the present embodiment at one of two opposing sides of high reflective layer 72, high reflective layer 72 touches laser active body 52 and on the other side of the two opposing sides high reflective layer 72 is covered with metallization coating 132.

Soldering joint 112 has been produced by laser soldering, in particular by a method as explained below.

Accordingly, during the connection process heat sink element 92 and amplifying element 12 have essentially not been heated up and accordingly heat sink element 92 and amplifying element 12 are essentially free of, in particular thermal induced, stresses and do essentially not exhibit distortions, in particular thermal induced, distortions.

Due to the laser soldering advantageously solder filling composition 114 is essentially free of inclusions of pollutants, for example free of gaseous blisters, such as gas pockets.

In connection with the explanations and in the figures regarding a second embodiment of a radiation field amplifying system 10 parts and elements which are identical to those of the first embodiment or have the same function basically are designated with the same reference sign and with respect to the explanations of these parts and elements it is fully referred to the explanations given in connection with the first embodiment unless in the following a variation of these parts and elements is described.

In contrast to the first embodiment, in the second embodiment at least one of the connecting sides 124, 126, preferably both connecting sides 124 and 126, of amplifying element 12 and heat sink element 92 is/are, in particular with respect to the respective geometrical reference plane 144, 146, for example slightly, bended.

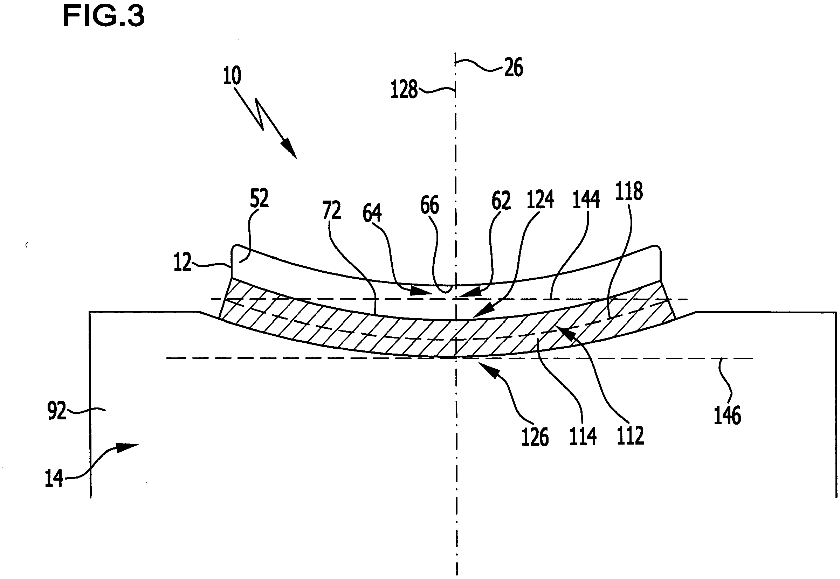

Exemplarily, a connection of amplifying element 12 and heat sink element 92 with a soldering joint 112 according to the second embodiment is shown in fig. 3 in which the bending is extremely enhanced illustrated for the sake of a clearer visibility.

In particular, connecting side 124 of amplifying element 12 is convex shaped.

Preferably, a mean radius of curvature of connecting side 124 of amplifying element 12, in particular of its surface, is in the range between 1 m and 5 m.

Connecting side 126 of heat sink element 92 is preferably, at least within contact area 127, concave shaped.

For example, the surface of connecting side 126 of heat sink element 92 essentially touches geometrical reference plane 146 at connection axis 128 and the surface bends away from geometrical reference plane 146 towards amplifying element 12 upon increasing a radial distance from connection axis 128.

Accordingly, a distance from the surface of heat sink element 92 at connecting side 126 to geometrical reference plane 146 increases upon increasing the radial distance from connection axis 128.

For example, a mean radius of curvature of bending of the connecting side 126 of heat sink element 92, in particular of its surface, is in the range between 1 m and 5 m.

Advantageously, the mean radius of curvature of connecting side 126 of heat sink element 92 is slightly larger, for example at most by 5 % larger, than the mean radius of curvature of connecting side 124 of amplifying element 12.

With that, also connection section 122 is with respect to a geometrical plane, which runs at least approximately perpendicular to connection axis 128, slightly bended.

Preferably, a thickness of connection section 122, which is measured in axial direction with respect to connection axis 128, increases upon increasing a radial distance from connection axis 128.

In particular, the thickness corresponds essentially to the distance between the surfaces of connecting sides 124 and 126 of amplifying element 12 and heat sink element 92 and this distance increases upon increasing a radial distance from connection axis 128.

Due to the production of soldering joint 112 by laser soldering, by which heat sink element 92 and amplifying element 12 are essentially not heated up, essentially no randomly induced bending of amplifying element 12 and/or heat sink element 92 occurs during the connecting process and therefore the geometry of soldering joint 122, in particular the bending of the connection sides 124, 126 of amplifying element 12 and heat sink element 92 and the thickness of connection section 122 can be essentially exactly predefined before the connecting process and are realized essentially with the predefined values after the connecting process.

For example, radiation field amplifying systems 10 according to the invention are produced with an apparatus which as a whole is designated with 210.

Apparatus 210 comprises a first supporting device 214 for amplifying element 12, a second supporting device 216 for heat sink element 92 and a radiation field providing system 222 with a radiation field source 224 for a soldering radiation field 226.

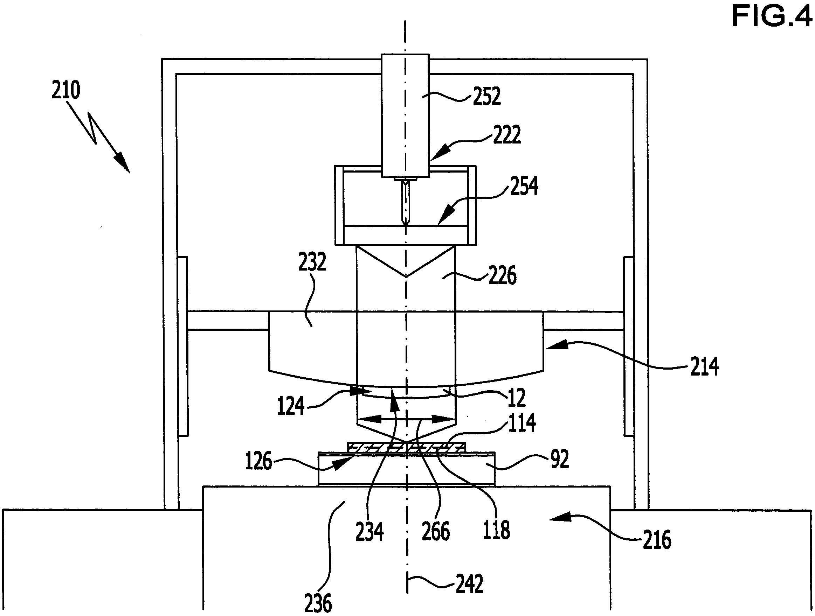

An apparatus 210 is exemplarily shown in fig. 4.

First supporting device 214 comprises a supporting structure 232 for supporting, for example fixing, amplifying element 12 during the connecting process.

In particular, supporting structure 232 comprises an attaching area 234 at which amplifying element 12 is attached.

Preferably, amplifying element 12 is held by supporting structure 232, in particular at attaching area 234, only by adhesion. That is, advantageously, amplifying element 12 is held clueless and without additional mechanical holders and amplifying element 12 is kept at attaching area 234 only by attaching it to attaching area 234.

In a variant of the embodiment, additionally or instead a mechanical holding device for holding amplifying element 12 is provided.

Preferably, attaching area 234 possesses a predefined shape. The predefined shape corresponds to a shape amplifying element 12 should essentially possess after the connecting process.

In particular, attaching area 234 is slightly bended with a radius of mean curvature being for example in the range between 1 m and 5 m.

By attaching amplifying element 12, in particular with a side, which is oppositely arranged to connecting side 124, to attaching area 234 amplifying element 12 adopts essentially, in particular due to its thin disc-like shape, the predefined shape according to the shape of attaching area 234.

In particular, amplifying element 12 adopts a bending, which corresponds to the shape of attaching area 234.

Second supporting device 216 comprises a supporting structure 236 to support heat sink element 92 during the connecting process. For example supporting structure 236 fixes heat sink element 92 at a particular position.

First and second supporting devices 214, 216 support amplifying element 12 and heat sink element 92 such that their connecting sides 124, 126 are facing towards each other.

In particular, first supporting device 214 supports amplifying element 12 such that geometrical reference plane 144 of its connecting side 124 is aligned at least approximately perpendicular to a supporting axis 242 of first and second supporting devices 214, 216.

In particular, second supporting device 216 supports heat sink element 92 such that geometrical reference plane 146 of connecting side 126 of heat sink element 92 is aligned at least approximately perpendicular to supporting axis 242.

First and second supporting devices 214 and 216, in particular their supporting structures 232 and 236, are arranged movably to each other, in particular are arranged movably to each other in axial direction with respect to supporting axis 242.

Radiation field providing system 222 comprises a radiation field source 252, which emits soldering radiation field 226.

A wavelength of soldering radiation field 226 is selected and adjusted such that solder filling composition 114 exhibits a high absorption rate at the wavelength of soldering radiation field 226 and that the other elements of radiation field amplifying system 10, through which soldering radiation field 226 propagates, are essentially transparent for soldering radiation field 226.

In the present embodiment, in particular amplifying element 12 is essentially transparent at the wavelength of soldering radiation field 226.

Additionally, radiation field providing system 222 comprises an optical equipment 254. Optical equipment 254 in particular guides soldering radiation field 226 towards the space between connecting sides 124 and 126 and onto soldering filling composition 114.

In particular, optical equipment 254 focuses soldering radiation field 226 onto solder filling composition 114.

In the present embodiment, optical equipment 254 widens a profile of soldering radiation field 226 transverse to a propagation direction of soldering radiation field 226.

In particular, optical equipment 254 manipulates, for example widens, the transverse profile of soldering radiation field 226, where preferably in a central area 266 of the transverse profile the intensity of soldering radiation field is approximately constant.

In particular, the extension of central area 266, transverse to supporting axis 242, corresponds essentially to an areal extension of solder filling composition 114, in particular to an areal extension transverse to supporting axis 242 which preferably corresponds to an areal extension transverse to connection axis 128.

A method for producing an embodiment of radiation field amplifying system 10 proceeds for example as follows and in particular apparatus 210 works as follows.

Amplifying element 12 is attached to supporting structure 232 of first supporting device 214, in particular at its attaching area 234.

Preferably, amplifying element 12 obtains thereby a desired overall shape which is in particular induced by supporting structure 232.

In particular, supporting structure 232 induces a curvature to amplifying element 12 with a desired radius of curvature.

Heat sink element 92 is attached to supporting structure 236 of second supporting device 216.

Amplifying element 12 and heat sink element 92 are arranged by supporting structures 232 and 236 with their connecting sides 124 and 126 facing to each other and are in particular aligned with respect to supporting axis 242 in a position as they should be arranged after the production process with respect to connection axis 128 and optical axis 26 except for their distance in axial direction with respect to supporting axis 242 which might be a bit larger before the production process than desired after the production process.

In particular, amplifying element 12 and heat sink element 92 are arranged by first and second supporting devices 214 and 216 such that geometrical reference planes 144 and 146 of their connecting sides 142 and 126 are aligned at least approximately perpendicular to supporting axis 242.

In the present embodiment solder filling composition 114 is brought between connecting sides 124 and 126 of amplifying element 12 and heat sink element 92 as a foil.

In a variation of the embodiment solder filling composition 114 is attached to amplifying element 12 before attaching amplifying element 12 to first supporting device 14. For example solder filling composition 114 is deposited to connecting side 124 by physical thin film deposition.

In another variation of the method parts of solder filling composition are deposited at one of the connecting sides 124 and 126 and another part of solder filling composition is brought between connecting sides 124 and 126 for example while amplifying element 12 and heat sink element 92 are attached to first and second supporting devices 214 and 216.

Amplifying element 12 and heat sink element 92 are, in particular by first and second supporting devices 214 and 216, moved towards to each other at least approximately in axial direction with respect to supporting axis 242 such that solder filling composition 114 touches both connecting sides 124 and 126 of amplifying element 12 on one hand and heat sink element 92 on the other hand.

For example, amplifying element 12 and heat sink element 92 are pressed together.

Solder filling composition 114 is brought between amplifying element 12 and heat sink element 92, such that solder filling composition 114 fills essentially the whole space between the respective connecting sides 126 and 124.

Soldering radiation field 226 is directed and focused by optical equipment 254 onto solder filling composition 114. In particular, solder filling composition 114 is along its whole extension in radial direction with respect to supporting axis 242, which essentially corresponds to its radial extension with respect to connection axis 128, exposed to soldering radiation field 226, in particular due to its widened transverse profile.

In the present embodiment, soldering radiation field propagates through amplifying element 12 and in particular supporting structure 232, and by exiting amplifying element 12 at its connecting side 124 soldering radiation field 226 hits solder filling composition 114 and induces energy into solder filling composition 114 which thereby heats up and melts.

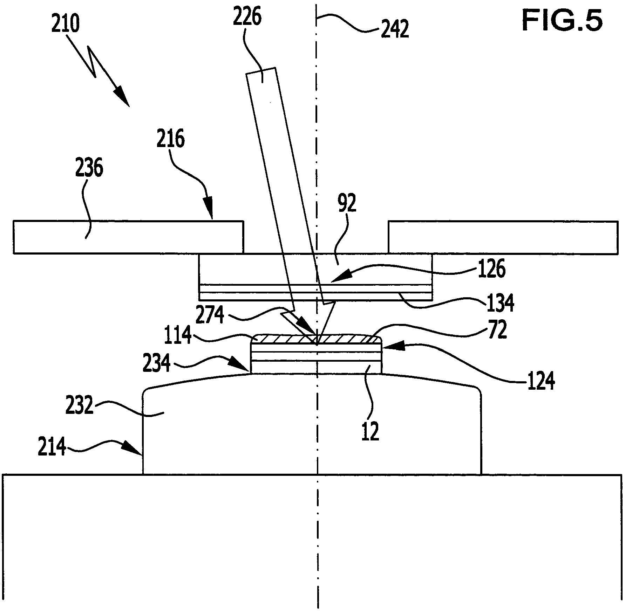

In a variation of the embodiment soldering radiation field 226 hits solder filling composition 114 from the other side, that is at the side facing towards heat sink element 92, as exemplarily sketched in fig. 5.

In the variation, soldering radiation field 226 propagates through heat sink element 92 and in particular supporting structure 136, and exits heat sink element 92 at connecting side 126. There it hits solder filling composition 114 and induces energy to heat up and to melt solder filling composition 114.

Advantageously, during exposure of solder filling composition 114 to soldering radiation field 226, heat sink element 92 and amplifying element 12 absorb essentially none or only a marginal amount of energy from soldering radiation field 226 and accordingly stay essentially at the temperature they had before exposure to soldering radiation field 226.

After an exposure time, the duration of which is long enough to completely melt solder filling composition 114, radiation field source 252 is turned off.

After the exposure to soldering radiation field 226 solder filling composition 114 cools down and soldering joint 112 is established.

In another embodiment of the method to produce an embodiment of radiation field amplifying system 10, soldering radiation field 226 comprises in its transverse profile a central area 266 at which soldering radiation field 226 transmits most of its energy and central area 266 is smaller than the extension of solder filling composition 114 radial to supporting axis 242, which essentially corresponds to the extension of solder filling composition 114 in radial direction with respect to connection axis 128.

Accordingly, only a part of solder filling composition 114 is at a same moment in time exposed to soldering radiation field 226.

In particular, optical equipment 254 directs and focuses soldering radiation field 226 onto an exposure area 274 of soldering joint 112, in particular of solder filling composition 114.

Within a geometrical projection plane 278 a projection of the part of solder filling composition 114 which is exposed to soldering radiation field 226, in particular the projection of exposure area 274, covers only a, for example small, part of the area of the projection of the whole of solder filling composition 114 onto geometrical projection plane 278.

Preferably, geometrical projection plane 278 runs at least approximately perpendicular to supporting axis 242 and runs at least approximately perpendicular to connection axis 128 of to be produced soldering joint 112.

In particular, by optical equipment 154 soldering radiation field 226 is consecutively with respect to time directed onto each part of solder filling composition 114 and melts the respective part.

For example, central area 266 extends elongated along a longish direction 286 and its extension at least approximately perpendicular to longish direction 286 is much smaller than its extension within longish direction 286.

In particular, central area 266 has an extension in longish direction 286 which is longer than the largest extension of solder filling composition 114 radial to supporting axis 242 and connection axis 128 and its extension at least approximately perpendicular to longish direction 286 is only a fraction, for example less than a fifth, of said largest extension of solder filling composition 114.

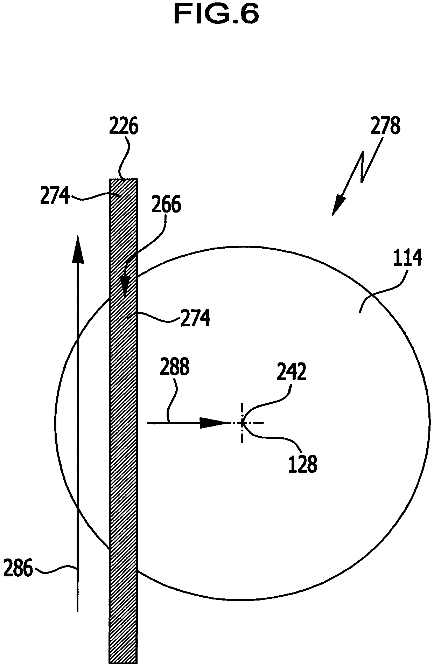

Accordingly, only a stripe of solder filling composition 114 is at one moment in time exposed to soldering radiation field 226, as exemplarily sketched in fig. 6.

Soldering radiation field 226 is, in particular by optical equipment 254, moved in an exposure direction 288. In particular, exposure direction 188 is at least approximately perpendicular to longish direction 286.

Accordingly, exposure area 274 is moved in geometrical projection plane 178 essentially in exposure direction 288.

By moving soldering radiation field 226 in exposure direction 288 each part of solder filling composition 114 is consecutively exposed to soldering radiation field 226 and melted by its induced energy.

In a variation of the method, exposure area 274 is essentially a spot, for example a circular shaped spot.

In the variation, the spot of soldering radiation field 226 is consecutively directed all over solder filling composition 114.

For example, at the beginning, exposure area 274 is aligned essentially central to supporting axis 242 and then consecutively moved in radial direction with respect to supporting axis 242, in particular in an essentially spiral way to outer parts of solder filling composition 114, which are at a radial distance to supporting axis 242.

## Claims

1. Method for producing a radiation field amplifying system (10) for amplifying a to be amplified radiation field (22), in particular for producing a thin disc laser amplifying system, which comprises an amplifying element (12) with a laser active body (52) and a cooling system (14) for cooling said amplifying element (12) with at least one heat sink element (92) wherein the method comprises the step of connecting said amplifying element (12) and said at least one heat sink element (92) by soldering with a solder filling composition (114), wherein the step of soldering comprises heating up, in particular melting, said solder filling composition (114) by exposing said solder filling composition (114) to a soldering radiation field (226).

2. Method according to claim 1, **characterized in that** said solder filling composition (114) is inserted in a connection section (122) between a connection side (124) of said amplifying element (12) and a connection side (126) of said at least one heat sink element (92), in particular said connection section (122) is filled with said solder filling composition (114), in particular said solder filling composition (114) is inserted areally in said connection section (122), in particular said solder filling composition (114) extends at least within a filling area (118) with said filling area extending between said connecting sides (124, 126).

3. Method according to one of the preceding claims, **characterized in that**, at least part of said solder filling composition (114) is inserted into said connection section (122) as a foil.

4. Method according to one of the preceding claims, **characterized in that** at least a part of said solder filling composition (114) is attached to a surface of at least one of said connecting sides (124, 126) of said amplifying element (12) and said at least one heat sink element (92) before said heating up, in particular, at least one surface of at least one of said connecting sides (124, 126) is at least partly coated by at least a part of said solder filling composition (114) before said heating up.

5. Method according one of the preceding claims, **characterized in that**, said solder filling composition (114) is exposed to said soldering radiation field (226) within at least one exposure interval and in particular an intensity of said soldering radiation field (226) is varied with respect to time and/or is varied spatially.

6. Method according to one of the preceding claims, **characterized in that**, the wavelength of said soldering radiation field (226) is chosen and selected such that said solder filling composition (114) has a large absorption rate for the chosen and selected wavelength and/or the wavelength of said soldering radiation field (226) is chosen and selected such that said amplifying element (12) and/or said at least one heat sink element (92) are essentially transparent for said soldering radiation field (226).

7. Method according to one of the preceding claims, **characterized in that**, said soldering radiation field (226) propagates through said amplifying element (12) and/or through said at least one heat sink element (92) and that in particular said amplifying element (12), through which said soldering radiation field (226) propagates, and/or said at least one heat sink element (92), through which said soldering radiation field (226) propagates, absorbs essentially no power from said soldering radiation field (226).

8. Method according to one of the preceding claims, **characterized in that** said amplifying element (12) and/or said at least one heat sink element (92) are kept essentially strain free, in particular free of thermal induced strain.

9. Method according to one of the preceding claims, **characterized in that** said amplifying element (12) is, in particular slightly, curved, in particular with a predefined radius of curvature curved.

10. Method according to one of the preceding claims, **characterized in that** said amplifying element (12) is attached to a attaching area of a supporting device (214), in particular that the shape, in particular the final shape after the connection process, of said amplifying element (12) is shaped, in particular modified, according to a shape of said attaching area (234) of said supporting device (214), in particular that said amplifying element (12) is curved according to a curvature of said attaching area (234) of said supporting device (214).

11. Method according to one of the preceding claims, **characterized in that** said amplifying element (12) and said at least one heat sink element (92), in particular with said solder filling composition (114) in between, are pressed against each other during at least a time interval of the step of connecting.

12. Radiation field amplifying system (10) for amplifying a to be amplified radiation field (22), in particular a thin disc laser amplifying system, which comprises an amplifying element (12) with a laser active body (52) and a cooling system (14) for cooling said amplifying element (12) with at least one heat sink element (92) wherein said amplifying element (12) and said at least one heat sink element (92) are connected by a soldering joint (112) and wherein said soldering joint (112) has been produced by laser soldering, in particular by a method according to one of the preceding claims.

13. Radiation field amplifying system (10) or method according to one of the preceding claims, wherein a thickness of said connection section (122), which essentially corresponds to a distance between said connecting side (124) of said amplifying element (12) and said connecting side (126) of said at least one heat sink element (92), increases, in particular slightly, upon increasing a radial distance from an axis of the arrangement, in particular an optical axis (26) of said radiation field amplifying system (10).

14. Radiation field amplifying system (10) or method according to one of the preceding claims, wherein a curvature of said connecting side (124) of said amplifying element (12) corresponds, in particular after the connecting process, essentially to a predefined curvature, in particular to a curvature of an attaching area (234) of a supporting device (214) which has supported said amplifying element (12) during the step of connecting.

15. Apparatus (210) for producing a radiation field amplifying system (10), in particular a thin disc laser amplifying system, in particular a radiation field amplifying system (10) according to one of the preceding claims, with an amplifying element (12) and a cooling system (14) for said amplifying element (12) with at least one heat sink element (92), wherein said apparatus (210) comprises a first supporting device (214) for said amplifying element (12) and a second supporting device (216) at least one for said heat sink element (92) and wherein said apparatus (210) comprises a radiation field providing system (222) for providing a soldering radiation field (226), wherein in particular said apparatus (210) is constructed such to produce said radiation field amplifying system in accordance to one of the preceding claims.
